# FASCICULE DE BREVET EUROPEEN

(11) **EP 0 670 571 B1**
(45) Date de publication et mention de la délivrance du brevet: **12.07.2000**
(21) Numéro de dépôt: 95400237.4
(22) Date de dépôt: 03.02.1995
(51) Int. Cl.: G11B 5/53

(54) **Tambour pour système d'enregistrement et de lecture à bande magnétique**
Trommel für ein System zur Aufnahme auf und Wiedergabe von einem Magnetband
Drum for a magnetic tape recording and reproducing system

(30) Priorité: 01.03.1994 FR 9402331
(43) Date de publication de la demande: 06.09.1995
(73) Titulaire: STELI, 92648 Boulogne (FR)
(72) Inventeur: Besnard, Dominique, F-92050 Paris la Defense (FR); Fayolle, Bruno, F-92050 Paris la Defense (FR); Leclaire, Alain, F-92050 Paris la Defense (FR); Ribiollet, Emmanuel, F-92050 Paris la Defense (FR)
(74) Mandataire: Ruellan-Lemonnier, Brigitte

(56) Documents cités:
- EP-A- 0 273 620
- EP-A- 0 336 422
- US-A- 4 924 329
- US-A- 5 121 265
- PATENT ABSTRACTS OF JAPAN vol. 015 no. 430 (P-1270) ,31 Octobre 1991 & JP-A-03 178006 (SHARP CORP) 2 Août 1991,

## Description

La présente invention concerne les systémes d'enregistrement et de lecture à bande magnétique tels que les magnétoscopes, les camcorders ou autres systémes similaires. Elle concerne plus particulièrement le tambour utilisé dans un tel système.

Dans les systèmes d'enregistrement et de lecture à bande magnétique connus actuellement, la bande magnétique est enroulée sur un tambour de guidage de la bande de manière à la guider lors de l'enregistrement ou de la lecture d'informations vidéo et/ou audio. De manière connue, le tambour est constitué de deux parties à savoir un tambour fixe ou statique dénommé aussi "tambour inférieur" et un tambour rotatif dénommé "tambour supérieur". Le tambour statique a pour fonction de guider la bande magnétique autour du tambour tandis que le tambour rotatif ou supérieur est monté en rotation sur un arbre rotatif fixé à un moteur d'entraînement. Le tambour rotatif comporte les différentes têtes de lecture qui, selon les modèles réalisés, peuvent être au nombre de 2, 3, 4 ou 6 têtes vidéo et comporter aussi deux têtes audio ainsi que 1 ou 2 têtes d'effacement dans le cas des modèles Hifi . Les têtes de lecture sont fixées rigidement au tambour rotatif de manière à tourner à la même vitesse que celui-ci. D'autre part, les tambours actuellement disponibles sur le marché comportent un transformateur rotatif monté à l'intérieur du tambour. De manière connue, le transformateur rotatif est constitué par une partie rotor fixée au tambour rotatif près des têtes de lecture et par une partie stator située à l'intérieur du tambour statique et reliée à un amplificateur de signaux qui permet d'amplifier les signaux vidéo et/ou les signaux audio issus des différentes têtes de lecture.

Les tambours actuellement utilisés pour les système d'enregistrement et de lecture haut de gamme présentent un certain nombre d'inconvénients. Les transformateurs rotatifs utilisés sont des pièces relativement encombrantes et coûteuses à réaliser, car ils doivent pouvoir transférer les signaux issus de différentes têtes de lecture. D'autre part, on observe au niveau de la détection des signaux des problèmes d'interférence et de "cross talk" dus à l'utilisation d'un seul transformateur rotatif.

Il a déjà été proposé d'utiliser des tambours comportant deux transformateurs rotatifs ; de tels tambours sont par exemple décrits dans l'abrégé de la demande de brevet JP-A-03 178 006 et dans la demande de brevet EP 0 336 422. L'utilisation de deux transformateur rotatifs permet de réduire les interférences entre les signaux traités par chacun.

La présente invention vise à réduire encore davantage ces interférences.

Pour ce faire, l'invention propose un tambour de guidage conforme à la revendication 1.

La présente invention a aussi pour but de réduire les coûts des tambours pour les modèles haut de gamme en utilisant des pièces déjà utilisées lors de la réalisation des tambours pour las modèles bas de gamme, notamment des tambours pour les modèles vidéo à 2 ou 4 têtes sans tête de lecture audio.

Selon un mode de réalisation particulier, le premier transformateur rotatif comporte une partie rotor fixée au tambour rotatif près des têtes de lecture et une partie stator située à l'intérieur du tambour statique et relié à un amplificateur. De préférence, l'amplificateur est monté à l'intérieur du tambour. De manière avantageuse, l'amplificateur est fixé sur la face de la partie stator du transformateur qui n'est pas en regard avec la partie rotor du transformateur. Cette caractéristique permet une meilleure détection des signaux issus des têtes de lecture qui sont en fait des signaux de très faible amplitude amenés directement à l'entrée de l'amplificateur sans fil de connexion de longueur importante.

D'autre part, le second transformateur rotatif comporte une partie rotor fixée à l'intérieur du tambour rotatif sur celui-ci de manière à capter les signaux issus des têtes de lecture et une partie stator connectée par l'intermédiaire d'un moyen rigide au tambour statique, le stator étant relié à un amplificateur. Dans ce cas, la partie rotor est connectée aux têtes audio ou vidéo par l'intermédiaire d'un système de connexion passant à travers le tambour rotatif.

Selon un mode de réalisation, le moyen rigide est constitué par une potence fixée sur une face du tambour statique ou sur la mécanique qui supporte le tambour. Dans ce cas, la potence peut être munie d'un moyen de réglage permettant l'ajustement de l'entrefer entre la partie rotor et la partie stator du deuxième transformateur rotatif.

Selon un second mode de réalisation, le moyen rigide est constitué par un ensemble mécanique portant un blindage, ledit ensemble étant relié à la potence. Dans ce cas, l'ensemble mécanique est monté sur l'arbre rotatif de manière à pouvoir régler l'entrefer entre la partie rotor et la partie stator du deuxième transformateur rotatif. Dans ce cas, l'amplificateur associé au second transformateur est monté sur ledit ensemble mécanique.

D'autres caractéristiques et avantages de la présente invention apparaîtront à la lecture d'un mode de réalisation préférentiel, faite avec référence au dessin ci-annexé dans lequel :
- la figure 1 est une vue en coupe axiale d'un tambour conforme à la présente invention ;
- la figure 2 est une vue en coupe agrandie montrant les connexions entre le premier transformateur rotatif et respectivement les têtes de lecture associées et l'amplificateur rotatif, et
- la figure 3 est une vue en coupe agrandie montrant les connexions entre le second transformateur rotatif et ses têtes de lecture et l'amplificateur rotatif.

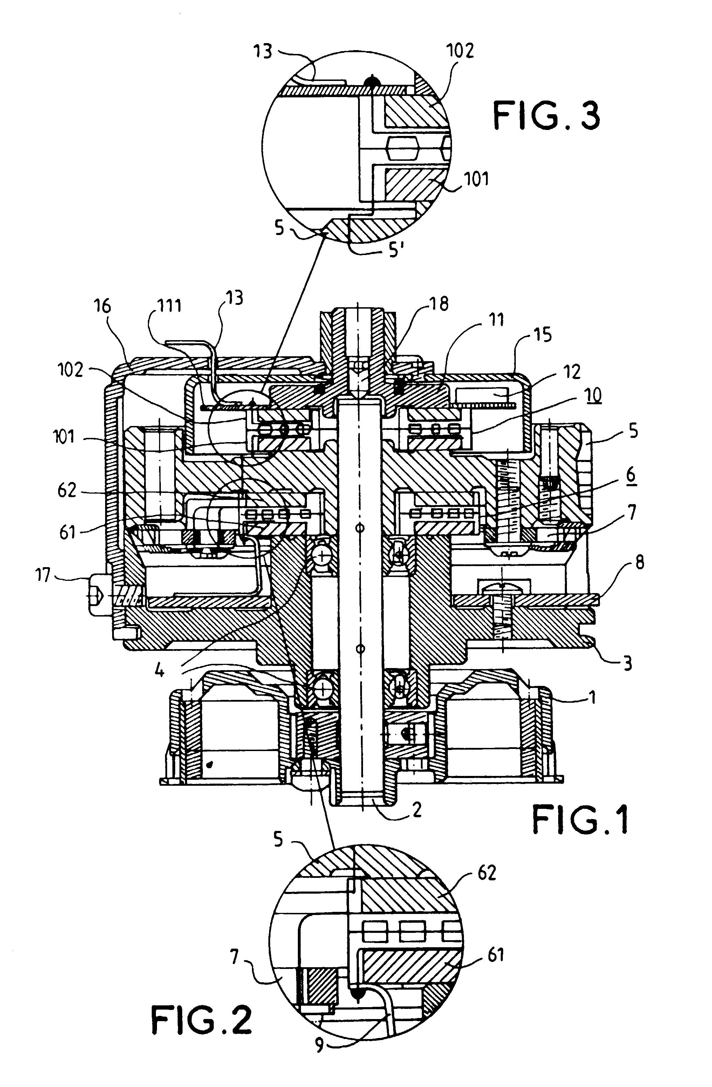

Sur la figure 1, on a représenté un tambour pour un système d'enregistrement et de lecture à bande magnétique haut de gamme, à savoir, par exemple, un tambour pour un magnétoscope comportant 4 têtes vidéo et deux têtes audio utilisées pour la Hifi.

Comme représenté sur la figure 1, de manière connue, le tambour est monté sur un arbre rotatif 2 entraîné par un moteur dont seul le rotor 1 a été représenté. Ce tambour comporte donc un tambour statique 3 dénommé aussi "tambour inférieur". Ce tambour statique n'est pas entraîné en rotation. Il est donc monté autour de l'arbre 2 par l'intermédiaire de roulements, tels que des roulements à billes 4 dans le mode de réalisation représenté. Au-dessus de ce tambour inférieur, est monté un tambour rotatif 5 dénommé "tambour supérieur". Ce tambour supérieur 5 est fixé sur l'arbre 2 de manière à être entraîné en rotation avec celui-ci au-dessus du tambour inférieur 3. Dans un évidement prévu entre le tambour inférieur 3 et le tambour supérieur 5 est monté un premier transformateur rotatif 6. Ce transformateur rotatif est, de préférence, réalisé dans la technologie des mini-transformateurs rotatifs, c'est-à-dire qu'il présente un diamètre nettement inférieur au diamètre des deux tambours supérieur et inférieur. Le transformateur rotatif 6 est constitué d'une partie stator 61 fixée sur le tambour inférieur 3 et une partie rotor 62 fixée sur le tambour supérieur 5 de manière à être entraîné en rotation avec celui-ci. D'autre part, comme représenté sur la figure 1, le tambour supérieur 5 supporte les têtes de lecture vidéo et audio référencées 7 dans le mode de réalisation représenté. Comme mentionné ci-dessus, le tambour supérieur 5 supporte quatre têtes de lecture vidéo et deux têtes de lecture audio pour la Hifi.

D'autre part, dans le mode de réalisation représenté, pour diminuer les pertes des signaux issus du transformateur, l'amplificateur est monté à l'intérieur du tambour inférieur 3 de manière à se trouver le plus près possible de la partie stator 61 du premier transformateur. La connexion entre la partie stator 61 et le circuit imprimé sur lequel est monté l'amplificateur 8 est réalisée par un système de connexion connue 9 tel que représenté de manière plus agrandie sur la figure 2. De même, sur cette figure 2, on voit que le rotor 62 du transformateur rotatif est placé à l'intérieur du tambour supérieur 5 non loin des têtes de lecture, de manière à raccourcir la connexion entre ce transformateur et la tête de lecture dont il capte les signaux. Dans le cas de la figure 2, seules, par exemple, les quatre têtes vidéo 7 sont connectées au stator 62 du transformateur rotatif 6 monté à l'intérieur du tambour.

Conformément à la présente invention, on utilise pour la détection des signaux issus des têtes de lecture audio un autre transformateur rotatif monté sur l'arbre 2 mais à l'extérieur du tambour. Ce type de montage apporte un certain nombre d'avantages. Notamment, on peut séparer physiquement les signaux audio des signaux vidéo au niveau des transformateurs, ce qui réduit les problèmes de "cross talk". On a aussi une séparation au niveau des amplificateurs de signaux puisque à chaque transformateur est associé un amplificateur, ce qui réduit aussi les problèmes d'interférence entre les signaux vidéo et audio. D'autre part, on peut, comme on le voit clairement sur la figure, utiliser des mini-transformateurs qui sont bien moins coûteux que les gros transformateurs habituellement utilisés dans ce type de système haut de gamme. De plus, les pièces décrites ci-dessus peuvent aussi être utilisées dans des modèles bas de gamme tels que les modèles avec simplement deux, trois ou quatre têtes vidéo sans tête audio, cela permet une standardisation des pièces entre les modèles bas de gamme et les modèles haut de gamme, ce qui se traduit par une réduction du prix des pièces assemblées.

Ainsi, conformément à la présente invention, on utilise pour la détection des signaux audio un second transformateur rotatif 10 comportant une partie rotor 101 montée sur la partie supérieure du tambour rotatif 5 et fixée à celui-ci de manière à être entraînée en rotation à la même vitesse que le tambour supérieur 5 et une partie stator 102 qui est fixée sur un ensemble mécanique relié au tambour inférieur 3 comme cela sera décrit ci-après.

Selon un mode de réalisation représenté sur la figure 1, l'ensemble mécanique est constitué d'une pièce en T 11 qui vient se monter au-dessus de l'arbre 2 sans être entraîné en rotation avec l'arbre 2. Sur la partie inférieure de cette pièce métallique en T 11 est fixé le stator 12. D'autre part, cette pièce métallique 11 se prolonge sur tout son pourtour par une plaque annulaire 111 sur laquelle peut être fixé un circuit imprimé et qui permet de recevoir l'amplificateur 12. Les signaux issus de l'amplificateur sont envoyés vers des circuits de traitement externes par un système de connexion 13. D'autre part, le rotor 101 est connecté aux têtes audio 7 en passant à travers une fente 5' réalisée dans la partie supérieure du tambour rotatif 5.

Les deux systèmes de connexion décrits ci-dessus sont représentés de manière plus agrandie sur la figure 3.

D'autre part, dans le mode de réalisation représenté, la pièce en T 11 est solidarisée avec un élément métallique 15 en forme de coupelle dont le rôle est de réaliser un blindage du transformateur rotatif 10. D'autre part, cet ensemble constitué de la pièce 11 et du blindage 15 est maintenu en position au-dessus de l'arbre 2 par l'intermédiaire d'une potence 16 dont l'extrémité inférieure vient se fixer sur le tambour par tous moyens de fixation connus 17 tels que des vis et des rivets sur le tambour inférieur 3. De ce fait, le stator 102, la pièce T11, l'élément métallique 15 et la potence sont fixés par rapport au tambour inférieur 3. Pour permettre le réglage de l'entrefer entre la partie rotor 101 et la partie stator 102 du second transformateur rotatif, la position de l'élément mécanique 11 supportant la partie stator 102 peut être ajustée verticalement par l'intermédiaire d'un système du type vis de réglage 18. D'autres moyens de réglage peuvent être envisagés, notamment la hauteur de la potence peut être réglée en utilisant un système du type glissière avec moyens de bloquage.

Dans le mode de réalisation décrit ci-dessus, on a mentionné que les têtes vidéo étaient connectées au premier transformateur rotatif tandis que les têtes audio étaient connectées au second transformateur rotatif.Toutefois, il est évident pour l'homme de l'art que l'on peut réaliser une inversion des connexions sans sortir du cadre de la présente invention. D'autre part, on peut envisager un système dans lequel l'amplificateur contenu à l'intérieur du tambour serait fixé directement sur la partie stator du transformateur rotatif du côté qui n'est pas en regard avec la partie rotor de ce transformateur rotatif. D'autres variantes peuvent être envisagées sans sortir du cadre de la présente invention.

## Revendications

1. Tambour de guidage pour un système d'enregistrement et de lecture à bande magnétique comportant :
un tambour statique (3),
un arbre rotatif (2) fixé à un moteur d'entraînement (1) et coaxial au tambour statique,
un tambour rotatif (5) monté sur l'arbre,
au moins une paire de têtes de lecture vidéo (7) et une paire de têtes de lecture audio (7) fixées rigidement au tambour rotatif,
un premier transformateur rotatif (6) monté à l'intérieur du tambour de guidage et comportant une partie rotor (62) reliée soit aux têtes vidéo soit aux têtes audio et une partie stator (61),
un second transformateur rotatif (10) monté à l'extérieur du tambour de guidage sur le même axe que le premier transformateur et comportant une partie rotor (101) reliée soit aux têtes audio, soit aux têtes vidéo et une partie stator (102),
caractérisé en ce que
la partie stator du premier transformateur est reliée à un premier amplificateur (8) monté à l'intérieur du tambour de guidage et en ce que
la partie stator du second transformateur est reliée à un second amplificateur (12) reçu sur une plaque (111) solidaire de la partie stator du second transformateur.

2. Tambour selon la revendication 1, caractérisé en ce que le premier amplificateur est fixé sur la face de la partie stator du premier transformateur qui n'est pas en regard de la partie rotor du premier transformateur.

3. Tambour selon l'une des revendications 1 ou 2, caractérisé en ce que la partie rotor du second transformateur est fixée à l'extérieur du tambour rotatif sur celui-ci de manière à capter les signaux issus des têtes de lecture et en ce que la partie stator du second transformateur est connectée par l'intermédiaire d'un moyen rigide au tambour statique.

4. Tambour selon la revendication 3, caractérisé en ce que la partie rotor (101) est connectée aux têtes audio ou vidéo par l'intermédiaire d'un système de connexion passant à travers (5') le tambour rotatif (5).

5. Tambour selon les revendication 3 et 4, caractérisé en ce que le moyen rigide est constitué par une potence fixée (16) sur une face du tambour statique (3) ou sur la mécanique supportant le tambour.

6. Tambour selon la revendication 5, caractérisé en ce que le moyen rigide est constitué par un ensemble mécanique (11) portant un blindage (15), l'ensemble étant relié à la potence (16).

7. Tambour selon la revendication 6, caractérisé en ce que l'ensemble mécanique est monté sur l'axe rotatif de manière (18) à pouvoir régler l'entrefer entre la partie rotor (102) et la partie stator (101) du deuxième transformateur rotatif (10).

8. Tambour selon les revendications 6 et 7, caractérisé en ce que l'amplificateur (12) associé au second transformateur est monté sur l'ensemble mécanique.

9. Tambour selon la revendication 5, caractérisé en ce que la potence est munie d'un moyen de réglage permettant l'ajustement de l'entrefer entre la partie rotor et la partie stator du deuxième transformateur rotatif.

## Claims

1. Guide drum for a magnetic tape recording and replay system including:
a static drum (3),
a rotary shaft (2) fixed to a drive motor (1) and coaxial with the static drum,
a rotary drum (5) mounted on the shaft, at least one pair of video replay heads (7) and one pair of audio replay heads (7) which are fixed rigidly to the rotary drum,
a first rotary transformer (6) mounted within the guide drum and including a rotor part (62) linked either to the video heads or to the audio heads and a stator part (61),
a second rotary transformer (10) mounted outside the guide drum on the same axis as the first transformer and including a rotor part (101) linked either to the audio heads, or to the video heads and a stator part (102),
characterized in that
the stator part of the first transformer is linked to a first amplifier (8) mounted within the guide drum and in that
the stator part of the second transformer is linked to a second amplifier (12) accommodated on a plate (111) firmly attached to the stator part of the second transformer.

2. Drum according to Claim 1, characterized in that the first amplifier is fixed to the face of the stator part of the first transformer which is not face-to-face with the rotor part of the first transformer.

3. Drum according to either of Claims 1 and 2, characterized in that the rotor part of the second transformer is fixed to the outside of the rotary drum on the latter so as to pick up the signals coming from the replay heads and in that the stator part of the second transformer is connected via a rigid means to the static drum.

4. Drum according to Claim 3, characterized in that the rotor part (101) is connected to the audio or video heads via a connection system passing through (5') the rotary drum (5).

5. Drum according to Claims 3 and 4, characterized in that the rigid means consists of a fixed bracket (16) on one face of the static drum (3) or on the metalwork supporting the drum.

6. Drum according to Claim 5, characterized in that the rigid means consists of a mechanical assembly (11) carrying screening (15), the assembly being linked to the bracket (16).

7. Drum according to Claim 6, characterized in that the mechanical assembly is mounted on the rotary axis in such a way (18) as to be able to set the gap between the rotor part (102) and the stator part (101) of the second rotary transformer (10).

8. Drum according to Claims 6 and 7, characterized in that the amplifier (12) associated with the second transformer is mounted on the mechanical assembly.

9. Drum according to Claim 5, characterized in that the bracket is equipped with a setting-up means allowing adjustment of the gap between the rotor part and the stator part of the second rotary transformer.

## Patentansprüche

1. Führungstrommel für ein System zur Aufnahme auf und Wiedergabe von einem Magnetband, enthaltend:
eine statische Trommel (3),
eine zu der statischen Trommel koaxiale, mit einem Antriebsmotor (1) verbundene rotierende Welle (2)
eine auf der Welle befestigte rotierende Trommel (5),
wenigstens ein Paar von Video-Leseköpfen (7) und ein Paar von Audio-Leseköpfen (7), die an der rotierenden Trommel befestigt sind,
einen ersten Rotationsübertrager (6) im Inneren der Führungstrommel mit einem Rotorteil (62), das entweder mit den Videoköpfen oder den Audioköpfen verbunden ist, und mit einem Statorteil (61),
einen zweiten Rotationsübertrager (10), der außerhalb der Führungstrommel auf derselben Achse wie der erste Übertrager liegt und ein Rotorteil (101), das entweder mit den Audioköpfen oder mit den Videoköpfen verbunden ist, und ein Statorteil (102) enthält,
dadurch gekennzeichnet, daß
das Statorteil des ersten Übertragers mit einem ersten Verstärker (8) verbunden ist, der im Inneren der Führungstrommel liegt, und daß
das Statorteil des zweiten Übertragers mit einem zweiten Verstärker (12) auf einer Platte (111) verbunden ist, die mit dem Statorteil des zweiten Übertragers ein Teil bildet.

2. Trommel nach Anspruch 1, dadurch gekennzeichnet, daß der erste Verstärker auf der Oberfläche des Statorteils des ersten Übertagers befestigt ist, die nicht dem Rotorteil des ersten Übertragers gegenüberliegt.

3. Trommel nach einem der Ansprüche 1 oder 2, dadurch gekennzeichnet, daß das Rotorteil des zweiten Übertragers außerhalb der rotierenden Trommel auf dieser derart angeordnet ist, daß es die Signale von den Leseköpfen empfängt, und daß das Statorteil des zweiten Transformators über ein starres Mittel mit der statischen Trommel verbunden ist.

4. Trommel nach Anspruch 3, dadurch gekennzeichnet, daß das Rotorteil (101) mit den Audio- oder Videoköpfen über ein Verbindungssystem verbunden ist, das sich durch einen Spalt (5') in die rotierende Trommel (5) erstreckt.

5. Trommel nach Anspruch 3 und 4, dadurch gekennzeichnet, daß das starre Mittel durch einen Tragarm (16) gebildet ist, der auf einer Fläche der statischen Trommel (3) oder auf der die Trommel tragenden Einrichtung befestigt ist.

6. Trommel nach Anspruch 5, dadurch gekennzeichnet, daß das starre Mittel durch eine mechanische Anordnung (11) gebildet ist, die eine Abschirmung (15) trägt, und daß die Anordnung mit dem Tragarm (16) verbunden ist.

7. Trommel nach Anspruch 6, dadurch gekennzeichnet, daß die mechanische Anordnung auf der rotierenden Achse derart gelagert ist (18), daß der Luftspalt zwischen dem Rotorteil (102) und dem Statorteil (101) des zweiten Rotationsübertragers (10) einstellbar ist.

8. Trommel nach Anspruch 6 und 7, dadurch gekennzeichnet, daß der dem zweiten Übertrager zugeordnete Verstärker (12) auf der mechanischen Anordnung befestigt ist.

9. Trommel nach Anspruch 5, dadurch gekennzeichnet, daß der Tragarm mit einem Einstellmittel zur Einstellung des Luftspalts zwischen dem Rotorteil und dem Statorteil des zweiten Rotationsübertragers versehen ist.
